# EUROPEAN PATENT APPLICATION

(11) **EP 4 651 334 A1**
(43) Date of publication of application: **19.11.2025**
(21) Application number: 24223700.6
(22) Date of filing: 30.12.2024
(51) Int. Cl.: H02J 3/32, H02J 3/00

(54) **MULTIPORT DC CONVERTER AND INTELLIGENT ENERGY MANAGEMENT SYSTEM**

(30) Priority: 13.05.2024 BR 102024009411
(71) Applicant: Rio Parana Energia S.A., 79590-000 Selviria Mato Grosso do Sul (BR)
(72) Inventor: SOSTMEYER MAI, LEONARDO, 88040-320 Florianópolis (BR); MARCHESINI, GIANCARLO, 88034-001 Florianópolis (BR); FAVRETTO, MATEUS ANDRÉ, 88054-600 Florianópolis (BR); FERREIRA SIMÃO, RENATO, 88034-600 Florianópolis (BR); ROSPIRSKI, ALEXSANDRA, 85854-508 Foz do Iguaçu (BR); DE OLIVEIRA, FERNANDO MARCOS, 85867-900 Foz do Iguaçu (BR); TAVARES CARNEIRO, FILIPE, 36520-000 Visconde do Rio Branco (BR); DANREE BUSTI, NATHALIE, 85867-900 Foz do Iguaçu (BR); GOTTLIEB JAHN, TALES, 85867-900 Foz do Iguaçu (BR); DA SILVA JÚNIOR, ROGÉRIO LUIZ, 88117-010 São José (BR); GARCIA CAMPANHOL, LEONARDO BRUNO, 86813-010 Apucarana (BR); GEMI PISSAIA, GUILHERME, 85861-160 Foz do Iguaçu (BR); GAYER DE ARAUJO, PEDRO, 04551-060 São Paulo (BR); RAMOS VALVERDE, JOSÉ ALFREDO, 04551-060 São Paulo (BR)
(74) Representative: Clarke, Modet y Cía., S.L.

(57) **Abstract**

The present invention describes a multiport converter designed to supply direct current loads comprising one or more energy sources, a battery, a multiport DC-DC converter connected to the energy sources and to a load, an IoT device for communication and control of the system. The multiport DC-DC converter further comprises an energy management system for selectively controlling the charging or discharging of the battery and the amount of energy directed to the load based on predictions of energy generation from the energy sources, based on a load demand and based on optimized scenarios. The present invention has direct application in green hydrogen generation plants powered by renewable energy sources, such as wind and photovoltaic energy. The present invention describes a system capable of self-managing and ensuring better use of energy from the sources and better efficiency of green hydrogen generation.

## Description

### FIELD OF THE DISCLOSURE

The present invention is related to an electrical energy conversion system by means of a multiport converter for supplying direct current loads based on solar, wind and battery bank energy, but not limited to these.

### BACKGROUNDS OF THE ART

Hydrogen generation from mixed renewable sources (solar and wind) is gaining relevance because it is a flexible and non-polluting energy vector. Furthermore, the wind energy generation can be considered as a complement to photovoltaic (PV) solar energy because their generation capacities are complementary depending on weather variations. When solar energy is at its peak production, wind energy is usually at its trough and vice versa.

In addition, Energy Storage Systems (ESS) are excellent allies of intermittent renewable generation, since they can store energy at peak generation times for future energy supply during periods of low renewable generation, improving the stability and reliability of these systems. Green hydrogen (GH2) can be seen as a form of energy storage, albeit in a long-term chemical form, obtained through the electrolysis of water using renewable energy sources.

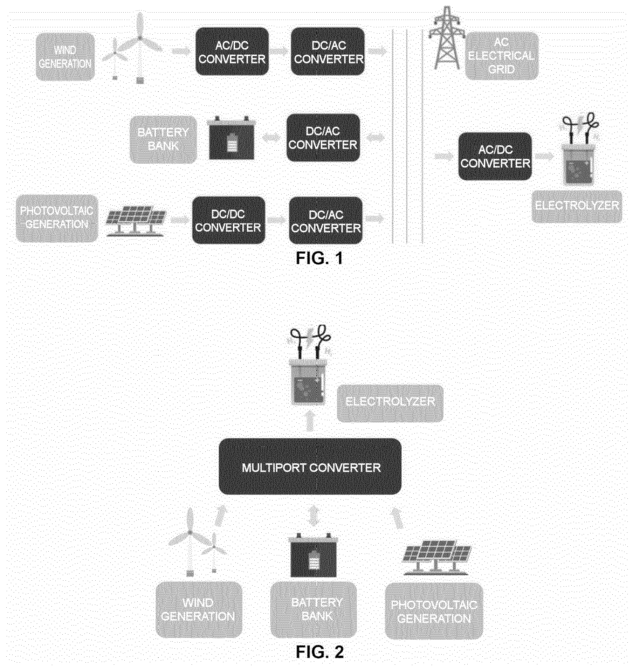

Hybrid microgrids composed of ESS with batteries, PV generation systems and electrolyzers work in direct current (DC). Wind systems, on the other hand, despite operating in three-phase alternating current (AC), have a DC conversion step in order to adapt the energy generated to the grid standards. Conventional microgrids, which integrate these technologies through an AC bus, as exemplified in figure 1, have several DC/DC, AC/DC and DC/AC conversion stages, which make the process inefficient.

The sum of the various conversion stages of the set used to generate green hydrogen ends up compromising the overall efficiency of the process and making it difficult to integrate the various devices, since they need to be compatible with each other. In addition, this segmentation of energy converters makes the specification and implementation of a microgrid a more complex task, since these devices need to be compatible with each other in terms of voltage and operating current. After specifying the converters, there is still a need to configure them for operation and an additional control device will be required to integrate their operation, such as a programmable logic controller (PLC).

### STATE OF THE ART

Document BR1120220123264, titled *"Conversor* de *energia multiportas"* ("Multiport Energy Converter"), discloses a multiport converter that includes a hybrid energy storage system (HESS) that provides a faster dynamic response to load changes than prior art systems, and allows reducing the size of the main energy storage system (ESS) to increase the life of the main ESS (e.g., energy battery), or retaining the same ESS size and increasing the range or life of the energy source. The multiport converter can advantageously result in lower investment and maintenance costs, and can also advantageously provide a path for inputs to directly power the load. All of these benefits can be achieved while reducing the number of active switches and overall component count, compared to prior art systems.

Document CN212726480U, titled "Grid-connected and off-grid type wind-solar-water hydrogen storage fuel cell direct current interconnection microgrid system", discloses a grid-connected and off-grid type wind-solar-water hydrogen storage fuel cell direct current interconnection microgrid system comprising a direct current bus, a wind energy generation system, a hydropower generation system, a photovoltaic energy generation system, a cellular energy storage system, a water electrolysis hydrogen production system, a fuel cell system, an electric load, an oxygen storage system, a hydrogen storage system, and a hydrogen load. The direct current bus is connected to the output end of the wind energy generation system, the output end of the hydropower generation system, the output end of the photovoltaic energy generation system, the battery energy storage system, the energy interface of the water electrolysis hydrogen production system, the output end of the fuel cell system and the electric load, and the oxygen output of the water electrolysis hydrogen production system is communicated with the oxygen storage system. The input of the hydrogen storage system, the output of the hydrogen storage system is communicated with the hydrogen input of the hydrogen load and the fuel cell system, and the system can effectively improve the energy utilization efficiency of the clean energy microgrid.

Document CN202210811923A, titled "Optimized operation control method for flexible DC power distribution network", discloses an optimized operation control method for a flexible direct current energy distribution network, which is suitable for optimized operation of a multi-terminal flexible direct current energy distribution network in a normal operation state, and is used to optimize the operation of the direct current energy distribution network based on three time scales of day-ahead prediction optimization, intraday continuous correction and real-time intraday feedback correction. And strategies of energy storage charging and discharging, converter power adjustment, flexible load power adjustment, photovoltaic output adjustment and the like are adopted, so that the consumption capacity of the distributed supply source is improved, the operation loss is reduced, and the economical and efficient operation of the direct current distribution network is ensured. According to the method, the flexibility of the flexible direct current energy distribution network is fully exerted, the potential of adjustable and controllable double-sided source-load resources such as energy storage, loads and energy sources is combined, safe and stable operation of the flexible direct current energy distribution network is achieved, and the absorption capacity and utilization rate of distributed energy sources are improved.

### SUMMARY OF THE INVENTION

The present invention describes a multiport DC converter, aiming at minimizing costs, increasing efficiency, and the possibility of local generation implementation, so that a microgrid has a single multiport energy converter. The multiport DC converter of the present invention unifies the equipment required for processing energy from multiple sources into just one, simplifying and reducing design costs and difficulties in implementing and controlling the microgrid.

In addition, the invention presents an advanced energy management algorithm based on Artificial Intelligence (AI) for controlling the DC converter. The algorithm is responsible for determining which energy sources will be used to power the load, ideally an GH2 electrolyzer, taking into account the features of each source and seeking to keep them operating at their maximum power points. In this way, the total efficiency of the microgrid is maximized. The AI uses historical energy generation data, as well as meteorological information, to make accurate predictions of energy production from PV and wind sources. Based on these predictions, the AI makes strategic decisions about energy storage in the battery bank. Taking into account a future demand defined by the user, maximum GH2 production can be guaranteed. The optimization algorithm plays a crucial role in scheduling the optimal time setpoints for the electrolyzer. Based on energy generation predictions and GH2 production needs, the algorithm determines the most appropriate times to direct energy to the electrolyzer, taking into account demand conditions and the features of the available energy sources.

Communication between the multiport converter, PLC (Programmable Logic Controller), which controls the load, and artificial intelligence in the cloud takes place by means of a device called IoT Manager. This is a communication hub that concentrates and directs data collected from the system (formed by the load, multiport converter, battery and auxiliary peripherals) sending it to a server, in addition to receiving operating commands calculated by the AI and directing them to the multiport converter. It can be connected to the converter and the battery's BMS (Battery Management System) module via CAN (Controller Area Network) communication, with the PLC that controls the hydrogen plant, for example, via the ModBus protocol and has an internet connection via a 2G/4G mobile network and via Wi-Fi.

### BRIEF DESCRIPTION OF THE DRAWINGS

The present invention will be described below with reference to the typical embodiments of the same and also with reference to the attached drawings, in which:
Figure 1 is a representation of a conventional AC microgrid according to the state of the art;
Figure 2 is a simplified representation of the DC microgrid using the multiport DC converter according to the present invention;
Figure 3 is a detailed representation of a DC microgrid using the multiport DC converter according to the present invention;
Figure 4 is a representation of the software architecture of the multiport DC converter according to the present invention;
Figure 5 is a representation of the general architecture of the energy management module, according to the present invention;
Figure 6 represents the architectural diagram of the IoT Manager device, according to the present invention.

### DETAILED DESCRIPTION OF THE INVENTION

Specific embodiments of the present disclosure are described below. In an effort to provide a concise description of these embodiments, all features of an actual implementation may not be described in the specification. It should be appreciated that in the development of any actual implementation, as in any engineering or design project, numerous implementation-specific decisions must be made to achieve the specific objectives of the developers, such as compliance with system-related and business constraints, which may vary from one implementation to another. In addition, it should be appreciated that such a development effort may be complex and time-consuming, but would nevertheless be a routine design, manufacturing, and manufacturing undertaking for those of ordinary skill having the benefit of this disclosure.

The present invention comprises the implementation of a single energy converter consisting of a multiport topology, unifying the equipment required for processing energy from multiple sources into just one, so that each source will be operated by an arm of the same converter, reducing power electronics costs. An example of the proposed topology is illustrated in Figure 2.

The present technology was developed in order to power an electrolyzer of a green hydrogen generation plant (GH2), which are normally powered by renewable energy sources such as wind and photovoltaic. Therefore, most of the figures and examples of the present description show the said electrolyzer as a load and a wind source and a photovoltaic source as energy supply. However, the invention is not limited in this way. The technician skilled on the subject will readily realize that the present description can be used to power any type of load powered by direct current and using any type of energy source, simply by making the necessary adjustments to the control and power modules that make up the multiport converter.

The use of a DC grid and the removal of energy conversion steps, compared to a traditional grid, allows a significant increase in the overall efficiency of the system. Furthermore, designing a converter for a specific application (e.g., GH2 production) allows it to operate at its peak efficiency during the nominal operating regime.

To add to the concept of increased efficiency, switches such as Gallium Nitride (GaNFET) and/or Silicon Carbide (SiC) transistors are preferably used, which offer switching losses an order of magnitude lower when compared to MOSFET or IGBT transistors. They also allow the converter to achieve higher switching frequencies and greater efficiency, minimizing the size of the equipment by reducing passive components.

At least one of the converter arms must have bidirectional energy processing capacity to support the use of a battery bank as one of the sources. The battery bank will be used to store the surplus electrical energy produced by renewable sources at production peak times for future use at energy peak consumption times, ensuring stability in the supply of energy to the load.

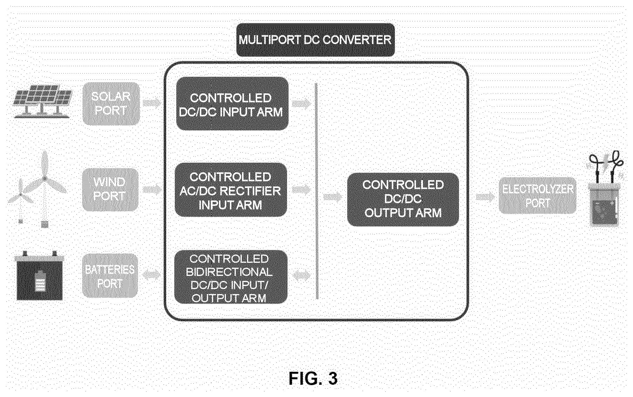

Based on this, Figure 3 presents the block diagram of the proposed multiport converter and shows the preferred application, where the power is supplied by a wind energy generation and a photovoltaic (PV) energy generation, and the load is an electrolyzer of an GH2 plant.

The arm for connecting the wind generation consists of a three-phase rectifier, responsible for transforming the three-phase AC voltage of the wind generator into direct current, followed by a unidirectional step-down-step-up DC/DC converter, which will preferably act with a current control system that ensures maximum operating efficiency of the generator and regulates the current supplied to the electrolyzer. These types of maximum power control, also known as MPPT (Maximum Power Point Tracking - MPPT), are algorithms that seek to maximize energy extraction from systems that present a non-linear power curve. In the case of wind systems, the vast majority of MPPT applications depend on the measurement of mechanical parameters, such as machine speed or blade angle.

In the case of the present invention, the multiport converter preferably uses a strategy that is immune to mechanical parameters at the wind generator, which depends on the constructive aspects of the wind generator. An MPPT algorithm based on reading the voltage and current of the post-rectifier should be used, increasing the efficiency of the tracking method and making it more flexible for use with different wind generator.

The connection port for the PV modules, in turn, is made through unidirectional DC/DC arms. This also uses an MPPT control to maximize the output power of the photovoltaic array. Photovoltaic systems, as well as wind systems, have a non-linear power curve, thus requiring a tracking algorithm. The MPPT algorithm used here, therefore, can be similar to that used with wind system, where the voltage and current quantities will also be used as input parameters for the algorithm.

For the battery energy storage system, a bidirectional DC-DC converter is used, charging battery systems at times of highest energy generation and discharging them during electrolyzer operation, i.e., using the same as an energy source at times of low energy generation from wind and/or PV sources.

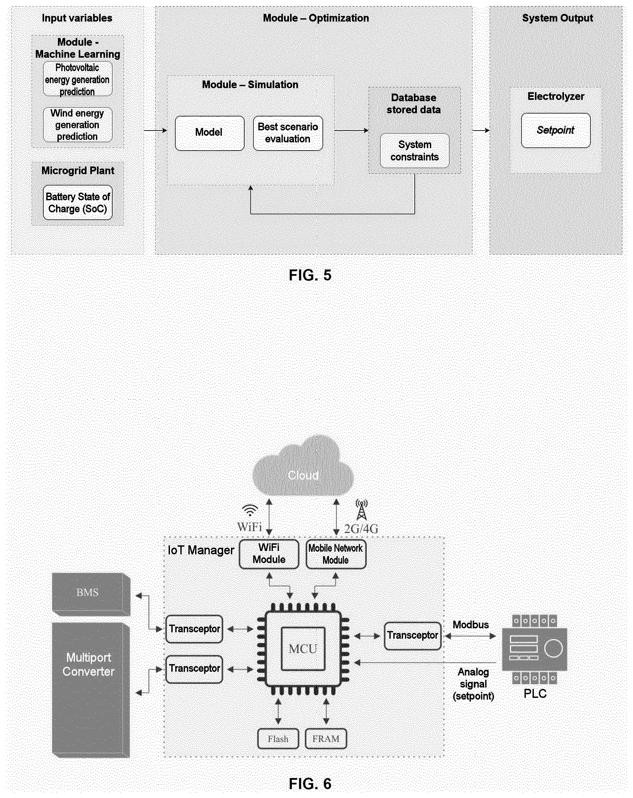

The structure of the multiport converter consists of a hierarchical control system, formed by three control levels: primary control, secondary control and tertiary control. Each level performs specific functions and has different response speeds. Communication between the hierarchical levels occurs through an IoT system called IoT Manager, illustrated in Figure 6.

The IoT Manager, represented in Figure 6, has a microcontroller unit (MCU) connected to a memory (e.g. Flash memory) and a FRAM. The IoT Manager communicates with the BMS, the multiport DC converter and the PLC by means of transceiver devices for the bilateral sending and receiving of data between these components. For the BMS, communication is preferably carried out via CAN (Controller Area Network), while in the case of the PLC a Modbus protocol is preferably used. The IoT Manager also communicates bilaterally with a cloud, from which meteorological or operator control data can be obtained if the operating parameters of the multiport DC converter are to be changed. Communication with the cloud can be done via a Wi-Fi module and/or a mobile network module (2G/4G). The MCU is additionally configured to receive an analog signal (setpoint) from the PLC.

Primary control is the lowest level of the control hierarchy, and consequently, it has faster responses than the control of other levels. The primary control of the multiport converter refers to the most basic level control devices that monitor and respond directly to local network conditions, i.e., local voltage and current controllers. This includes the controller of energy storage systems (such as batteries), wind and PV converter ports. These primary controls act to maintain local stability by controlling voltage, current and other variables essential for the operation of the individual components of the multiport DC converter. Typically following control references provided by higher level controls, the primary level control acts on the switch level control of the converters, and can operate in centralized or independent strategies. In this way, its main function is to control the voltage, current and power of each converter input, operating together with the maximum power point tracker (MPPT) of wind and PV systems, in addition to controlling the bus voltage and the quality of the current to be supplied to the electrolyzer, aiming for a regulated DC current with ripple below 10% of the nominal value.

The secondary control is located at the intermediate level of the control hierarchy. In the case of the multiport converter of the present invention, the secondary control is responsible for voltage regulation, current balancing between devices and management of battery energy storage. This level of control seeks to reduce the deviation from the nominal voltage of the intermediate bus of the converter by means of a closed-loop voltage controller (PI, PID or Resonant controllers can be used, techniques already known in the state of the art). The control of the bidirectional battery arm is essential to balance this dynamic, ensuring that energy is available when needed. Another point that can be highlighted within the control strategy, where the battery is the focal point, is related to the intermittent sources associated with microgrids. Sources such as PV and wind are intermittent, depending on weather conditions. The battery can compensate for this variability by storing energy when there is excess production and releasing it when generation is low, ensuring a stable supply. There is also the issue of demand peaks and optimization of the use of renewable sources, in addition to safety and reliability operating as an energy backup.

The tertiary control represents the highest level of control in the hierarchy. Its main objective is to optimize the operation of the multiport converter. At this level, technologies such as the Internet of Things (IoT), predictive systems and energy management optimization are applied. The tertiary control works as an optimization of the previous control systems. Its function is to predict energy generation and consumption, as well as to optimize the use of energy resources, aiming at ensuring that the energy is delivered to the load as scheduled.

The interaction of hierarchical control levels plays a crucial role in ensuring the stability, efficiency and safety of the system, and is essential for optimized operation. The interaction between the control levels occurs as follows: The tertiary control is executed on a server and, by means of energy management algorithms and weather forecasts, defines the percentage of power (in relation to the nominal power) that will be applied to the load and where this energy will come from (PV/wind sources or batteries). Thus, the tertiary control defines operating setpoints for the output arm of the multiport converter and for the bidirectional arm of the battery. This setpoint will be a value between 0 and 1 for the output arm and between -1 and 1 for the bidirectional arm. These values are then sent to the multiport converter by means of an Internet connection to the IoT Manager. The IoT Manager receives the commands from the server and directs the same to the multiport converter via the CAN network. The secondary level control, in turn, begins in the multiport converter, and the received setpoint data is converted to current references. This is done by multiplying the received value by the nominal current of each converter arm. These new current reference values are used by the current control loops of the converter output arms and the bidirectional battery arm at the primary control level. Additional adjustments are made to the current values in order to protect the converter and stabilize the intermediate bus voltage through energy balance. That is, the sum of the converter input and output currents must always be zero, so that all the energy is directed to the load or the battery. These current reference values are then passed to the primary level control, which is executed in the DSP (Digital Signal Processor) of each arm of the converter, and will apply this reference to the current control loops, which, through PI or PID controllers, adjust the switching of the power switches of the arms of the multiport converter to deliver the current at the established level.

### Intelligent energy management system

The intelligent energy management system solution consists of an Artificial Intelligence (AI) comprising an optimization system and a prediction and optimization module. This AI is responsible for managing the different energy generating sources used for GH2 generation. The AI is applied to make automatic decisions, aiming at balancing and optimizing the system. There follows below a breakdown of the optimization system:

### Data Input:

1) Photovoltaic Generation Prediction: Information about the amount of energy that will be generated by the photovoltaic system over a period of time.
2) Current Battery State: Current charge level of the battery bank.
3) Load Demand: The amount of energy/power that will be needed at a given time in the future.

### System Constraints:

The system where the multiport converter is inserted imposes constraints such as the maximum and minimum generation of photovoltaic power, the maximum and minimum battery capacity, and the power range supported by the electrolyzer.

### Optimization Problem Formulation:

The objective is to maximize energy availability to the load at all times. This is achieved by adjusting the hourly power to the load and deciding when to store or withdraw energy from the battery.

### Decision Variables:

Variables such as the nominal power of the load and the power supplied to charge the battery or extracted from the battery are determined by the optimization algorithm.

### Initial Conditions and Boundaries:

Initial conditions are established, such as the minimum power of the load, and boundaries are defined to ensure that the solutions are within the constraints of the system.

### Resolution of the Optimization Problem:

The optimization algorithm is applied to find the ideal values of the decision variables that ensure meeting the load demand at any given time, subject to the system constraints.

### Algorithm Output:

The algorithm output provides the ideal hourly power for the load and the power used to charge or discharge the battery.

Below, some exemplary scenarios of application of the invention will be illustrated, taken from validation tests. These scenarios used an electrolyzer from a green hydrogen generation plant as a load with the objective of maximizing the generation of green hydrogen. Such an application should not be interpreted as limiting, and is provided here merely as an example. The technician skilled on the subject will readily realize that the present invention is applicable to any type of load.

### Scenario 1 - Charged Battery, High Prediction of Photovoltaic Generation:

Initial Conditions: Charged battery.

Photovoltaic Generation Prediction: High generation throughout the day.

### Hydrogen Demand: Moderate.

Algorithm Behavior: In this scenario, the optimization may suggest that most of the energy generated be directed to the electrolyzer, maximizing hydrogen production. Since the battery is charged, there is no need to store energy. The electrolyzer will operate close to its maximum capacity. There is no battery charging, since the photovoltaic production meets the demand and there is no need to store energy for periods of low generation.

### Scenario 2 - Discharged Battery, High Photovoltaic Generation Prediction:

Initial Conditions: Battery fully/partially discharged.

Photovoltaic Generation Prediction: High generation throughout the day.

### Hydrogen Demand: Moderate.

Algorithm Behavior: May choose to store excess energy in the battery during periods of high generation to use in times of low generation.

### Scenario 3 - Partially Charged Battery, Photovoltaic Generation Peaks:

### Initial Conditions: Partially charged battery.

Photovoltaic Generation Prediction: Generation peaks interspersed with periods of low generation.

### Hydrogen Demand: High - constant.

Algorithm Behavior: Can use energy from photovoltaic peaks to charge the battery and meet demand later, maintaining constant hydrogen production.

### Scenario 4 - Discharged Battery, Low Photovoltaic Generation:

Initial Conditions: Discharged battery.

Photovoltaic Generation Prediction: Low generation throughout the day.

### Hydrogen Demand: Moderate.

Algorithm Behavior: Prioritizes hydrogen production using the little energy available from photovoltaic generation and, if necessary, withdraws energy stored in the battery.

### Scenario 5 - Urgent Hydrogen Demand, Low Photovoltaic Generation:

### Initial Conditions: Partially charged battery.

Photovoltaic Generation Prediction: Low generation throughout the day.

### Hydrogen Demand: Urgent and high.

Algorithm Behavior: Focuses hydrogen generation, prioritizing battery use, even if this may lead to greater discharge.

These are just illustrative examples, and the effectiveness of the algorithm depends on the specific dynamics of each system, such as load characteristics, component efficiency, and photovoltaic generation patterns. The algorithm adapts to optimize the balance between hydrogen production, the energy storage, and the specific demand of the off-grid system.

Also belonging to the invention's AI module, the prediction and optimization module operates based on short/medium-term weather forecast and energy generation data, seeking a long-term balance using historical data. Meteorological data will be captured by two possible options: if the microgrid has a meteorological station connected to the cloud and integrated into the database, or by obtaining data through external APIs, such as OpenWeatherMap API, WeatherBit API, Dark Sky API, AccuWeather API.

For generation prediction, two Machine Learning algorithms are used, XGboost and LSTM (Long Short-Term Memory). LSTM is a type of Recurring Neural Network (RNN) architecture designed to handle the complexity of long temporal sequences. Unlike traditional RNNs, LSTM has "gates" mechanisms that allow the memorization and forgetting of information over time, which is crucial for capturing relevant temporal patterns. The LSTM architecture is composed of cell units, each equipped with three main gates: the input gate, the forget gate, and the output gate. These gates control the flow of information, allowing the selective retention or forgetting of data. This makes LSTM effective in modeling long-term dependency relationships in temporal data. The fundamental steps when implementing an LSTM model include data preparation, model construction, training, and making predictions. During training, the model adjusts the weights of the connections between the cell units to optimize its ability to predict patterns in the input temporal sequences.

XGboost is a machine learning library that excels at building robust, efficient, and accurate decision tree models. Using the boosting method, XGBoost combines multiple weak decision trees to form a stronger, more generalizable model. This method is particularly effective at predicting continuous values, making it well-suited for temporal prediction problems.

Building an XGBoost model involves defining hyperparameters such as the maximum tree depth, the learning rate, and the number of trees. During training, the XGBoost model adjusts these hyperparameters to minimize the loss function, thereby improving its ability to generalize to new data.

The use of algorithms such as LSTM and XGBoost for predicting energy generation over a 96-hour horizon represents an advanced application in the field of time series. When predicting with XGBoost, the model combines the predictions of each individual tree to generate a final prediction. Its interpretability, resulting from the tree structure used, allows a clearer understanding of the factors that influence the predictions. In data preparation, it is crucial to organize the time sequences appropriately, considering the 96-hour horizon. Normalizing the data facilitates the model convergence. Both LSTM and XGBoost present specific challenges and considerations when dealing with a 96-hour horizon. LSTM excels at capturing complex temporal patterns, while XGBoost, with its interpretability, offers a clear view of the factors that influence the predictions. Continuous experimentation, adjustments to the architecture and hyperparameters, in addition to the cross-validation, are fundamental practices for optimizing the performance of these models in specific scenarios.

Therefore, using machine learning to predict generation and use it as input for an optimization algorithm enables intelligent decisions and autonomous capabilities that adapt to variations in demand and generation, ensuring efficient storage management.

The integration of this intelligence with the multiport converter is carried out through the IoT Manager, which is a communication device specifically developed for the needs of the present invention, as described previously and presented in figure 6. The intelligent control algorithm operates at the third hierarchical control level of the multiport converter and receives information from other hierarchical levels through IoT functionalities, communicating with a cloud server using a 2G/4G cellular radio module, receiving the operating parameters of the primary and secondary levels and sending the collected data to the cloud database.

In the tertiary control, the AI algorithm runs in a cloud. This algorithm is responsible for determining the operating parameters of each port of the DC-DC converter.

The third level of hierarchical control also has an Intelligent Energy Management System (EMS), which is divided into two modules: Machine Learning Module and Optimization Module. The cloud architecture allows data to be collected, processed and stored in a centralized way. A database keeps a historical record of photovoltaic and wind generation data, hydrogen demand, battery energy storage and other relevant metrics such as the status of the multiport converter, hydrogen plant and battery bank, for example. An application programming interface (API) enables integration with other systems or devices, such as the IoT Manager, providing real-time information and enabling communication between system components.

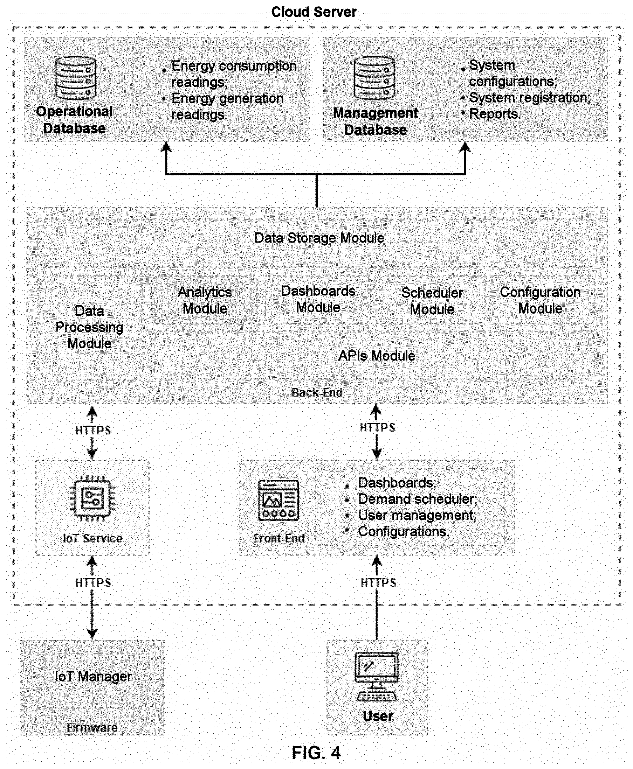

The EMS begins by collecting data obtained by sensors from energy sources, in this case, photovoltaic panels and wind turbines, which provide information about current energy generation. This data is sent to a cloud database, through the IoT Manager, where it is stored for future analysis. The Machine Learning Module then makes a prediction of energy generation, supplied with this historical data and meteorological information to predict the amount of energy that will be generated by the solar panels and wind turbines in a future time horizon, such as 96 hours in the future. Based on this prediction, the EMS can make decisions about whether or not to store energy in the battery bank. The entire software architecture is shown in Figure 4, which will be described in more detail below.

The application's web system is designed with a layered architecture, where each layer has a specific area of operation. The web system uses two databases: one to store operating data and another to store the system's management and registration information. This allows for efficient insertion of IoT Manager data and agile retrieval to provide information to dashboards. The operational database is preferably a high-performance and horizontally scalable one, for example, MongoDB, which is a NoSQL database. To ensure communication between applications, a module-based backend service is proposed, where each module performs a specific task. Integration between the frontend, weather systems (for example: OpenWeatherMap API, WeatherBit API, Dark Sky API, AccuWeather API) and the platform occurs through APIs in the backend. Communication with the IoT Manager module is done through an IoT service that passes through a data processing module. The web system has a backend responsible for receiving, processing and storing data from the IoT Manager, interacting with the frontend, providing information to dashboards and handling AI algorithms. The frontend allows user interaction with the system and was developed with reusable components using JavaScript and the ReactJS framework. The application's state control is managed by Redux, facilitating the sharing of these states between components.

The Prediction and Optimization Module, found in Figure 5, is responsible for controlling when the battery should be charged and when the battery should be used as an energy source, in addition to defining the load demand, based on several prediction scenarios, such as the scenarios exemplified above. In the example of the present disclosure, it will be necessary for the user to define the amount of hydrogen generation in cubic meters, that is, the load demand. Based on the predictions of future energy generation, the Prediction and Optimization Module evaluates whether the amount of energy generated will be sufficient to meet the load demand (electrolyzer). If the prediction indicates a high future energy generation (greater than consumption), the Scheduling Prediction and Optimization Module can direct most of the energy, for example, more than 50% of the power, or all of the energy generated at that moment directly to the electrolyzer, increasing the output setpoint. This makes the most of the immediate availability of renewable energy to power the load, since there is a guarantee of sufficient future energy generation for operation without the need for battery energy. However, if the prediction future energy generation is low (less than demand), the system may choose to store energy in the battery bank, lowering the output setpoint and consequently reducing hydrogen generation. This strategy aims at accumulating surplus energy, when available, to ensure a stable supply of energy to the electrolyzer, even when the instantaneous generation of renewable energy is lower than that consumed by the electrolyzer. In this way, the Prediction and Optimization Module uses battery storage as a strategic energy reserve to maximize the energy output setpoint for the electrolyzer and maintain operation in the region of maximum efficiency, even during times of low renewable generation.

The system uses the API and the IoT Manager to communicate with the electrolyzer, providing information about energy availability and hydrogen demand. Based on this data, the electrolyzer can adjust its hydrogen production to meet the demand. Figure 5 shows the general architecture of the Analytics module, which controls the prediction of energy generation and manages energy allocation.

Figure 5 presents the input variables for the optimization algorithm. The first variable is the "Photovoltaic and Wind Generation Prediction", which provides information about the amount of energy expected to be generated by the photovoltaic and wind sources at a given time in the future. The second input variable is the "Battery State of Charge", which indicates the amount of energy stored in the battery. This information is essential to determine whether there is available capacity to store excess energy or whether it is necessary to use the energy immediately. Based on the current battery charge state, the system is configured to perform several predictions to achieve optimization, through the scenario that guarantees the maximization of scheduled hydrogen production. These simulations take into account system constraints, such as photovoltaic and wind generation boundaries, as well as the maximum storage capacity of the battery bank. Based on the simulation results, the optimization algorithm selects the best scenario that meets the system constraints and determines the "Maximum Hourly Setpoint for the Electrolyzer". This value represents the maximum power that should be directed to the electrolyzer at a given time, in order to maximize hydrogen production.

### Other application examples

Renewable energy generation: The system of the present invention can be applied in wind farms and solar plants, where multiple renewable energy sources are connected to the electrical grid. The multiport DC-DC converter allows the integration and efficient management of these different energy sources, maximizing renewable energy production.

Microgrids: In remote areas or islands, where access to the main energy grid may be limited, the system of the present invention can be used to establish autonomous microgrids. Different energy sources, such as solar panels, wind turbines and battery storage systems, can be integrated and efficiently managed by the converter and the management system, providing stable and sustainable energy to the community.

Hydrogen fueling stations: With the increasing interest in hydrogen fuel cell vehicles, the system of the present invention can be applied in hydrogen fueling stations. Different renewable energy sources, such as panels and wind turbines, can be integrated with the multiport DC-DC converter and the management system, ensuring the production of green hydrogen for vehicle fueling.

Integration with natural gas networks: The green hydrogen produced can be integrated into the existing natural gas network, contributing to the decarbonization of the gas sector. The multiport DC-DC converter and the intelligent IoT energy management system can be used to manage the production and injection of green hydrogen into the natural gas network, optimizing the use of renewable sources and ensuring the stability and quality of the hydrogen produced.

Electrification of transportation: With the increasing demand for electric vehicles, the system of the present invention can be applied in charging stations or electric vehicle refueling stations. Different energy sources, such as solar panels installed on the roof of the station and battery energy storage systems, can be integrated and managed to provide clean and renewable energy for charging electric vehicles.

Industrial infrastructure: The system can be implemented in industrial facilities to optimize energy consumption and reduce operating costs. The different energy sources available in the facility, such as solar panels on the roof, nearby wind turbines or cogeneration systems, can be integrated and managed by the converter and the management system to provide efficient and sustainable energy for industrial operations.

This development contributes to reducing the cost of the renewable hydrogen generation chain, and is related to maximizing plant efficiency through the use of a DC network with a single converter and its intelligent decision-making for energy generation and management. This solution can also assist in the development of distributed generation solutions with hydrogen production close to consumption sites, whether industrial or mobility sites, helping to mitigate costs related to the transportation of this fuel.

The combination of the technological solutions described herein forms a complete energy control and conversion system to operate an electrolysis plant, generating hydrogen locally. The resulting system is robust, scalable, low cost (compared to traditional multiport DC converters) and easy to implement, being suitable for deployment in different locations with hydrogen demand. In addition, it has intelligent monitoring and control features, providing an efficient process management.

Advantageously, the multiport converter according to the present invention is capable of dynamically adjusting the energy scheduling, taking full advantage of the renewable generation and the battery storage. This results in an optimized operation of the microgrid, enabling efficient hydrogen production and intelligent use of available resources. This innovative approach provides a more efficient and sustainable operation, contributing to the production of hydrogen in an environmentally responsible manner.

Although aspects of the present disclosure may be susceptible to various modifications and alternative forms, specific embodiments have been shown by way of example in the drawings and have been described in detail herein. But it should be understood that the invention is not intended to be limited to the particular forms disclosed. Rather, the invention should encompass all modifications, equivalents and alternatives that fall within the scope of the invention as defined by the following appended claims.

## Claims

1. A multiport DC converter, **characterized in that** it comprises:
one or more energy sources,
a battery,
the multiport DC-DC converter being configured to:
receive energy from one or more energy sources and/or from the battery,
charge the battery using at least part of the energy from the one or more energy sources, and
energize a load by directing energy from the one or more energy sources and/or the battery;
the multiport DC-DC converter further comprising an energy management system for selectively controlling the charging or discharging of the battery and the amount of energy directed to the load.

2. The multiport DC converter of claim 1, **characterized in that** the one or more energy sources comprise a photovoltaic energy source and a wind energy source, and wherein the load comprises a green hydrogen (GH2) electrolyzer.

3. The multiport DC converter of claim 2, **characterized in that** the energy management system performs selective control based on predictions of energy generation from the one or more energy sources and/or based on load demand predictions.

4. A energy management system for use with the multiport DC converter of any one of claims 1 to 3, **characterized in that** it comprises:
a machine learning module for predicting energy generation from each of the one or more energy sources;
a battery state-of-charge monitoring module;
a communication module, consisting of an energy management system and cloud services, in communication with the load, to determine load demand;
a prediction and optimization module configured to, based on the prediction of energy generation of each of the one or more energy sources, the battery charge state and a load demand, determine a battery charge using at least part of the energy coming from the one or more energy sources, and/or battery discharge to supply energy to the load, and/or increase or decrease the energy directed to the load.
